# EUROPEAN PATENT APPLICATION

(11) **EP 1 980 690 A2**
(43) Date of publication of application: **15.10.2008**
(21) Application number: 08005716.9
(22) Date of filing: 27.03.2008
(51) Int. Cl.: E05B 1/00, B62D 25/10

(54) **Engine hood door including variable door handle**

(30) Priority: 10.04.2007 KR 20070035215
(71) Applicant: Volvo Construction Equipment Holding Sweden AB, 631 85 Eskilstuna (SE)
(72) Inventor: Shin, Han Chul, Changwon (KR)
(74) Representative: Schmidt, Sven Hendrik

(57) **Abstract**

An engine hood door including a variable door handle is provided, in which a protruding length of the door handle from an outer side of the engine hood door is varied. The engine hood door includes a door handle having a handle portion and extending portions extending from both ends of the handle portion, each of the extending portions being movably engaged to a through-hole formed in the engine hood door, a resilient member, positioned between the extending portion penetrating the through-hole and an inner side of the engine hood door, for variably adjusting the protruding length of the handle portion protruding from an outer side of the engine hood door, and a locking pin fixed to each end of the extending portions for preventing the door handle from being released from the engine hood door. When the handle portion is pulled so as to open the engine hood door, the protruding length of the door handle from the outer side of the engine hood door is varied.

## Description

### CROSS-REFERENCE TO RELATED APPLICATION

This application is based on and claims priority from Korean Patent Application No. 10-2007-0035215, filed on April 10, 2007 in the Korean Intellectual Property Office, the disclosure of which is incorporated herein in its entirety by reference.

### BACKGROUND OF THE INVENTION

### Field of the invention

The present invention relates to an engine hood door for an engine hood mounted in an engine room of heavy equipment, and more particularly, to an engine hood door including a variable door handle, in which a protruding length of the door handle from an outer side of the engine hood door is varied.

### Description of the Prior Art

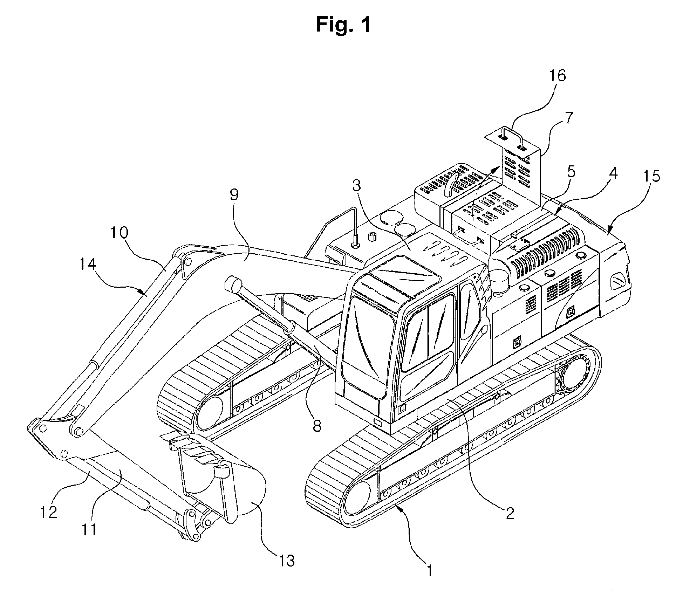

Referring to FIG. 1, the heavy equipment including an engine hood and a door hinge-engaged to a frame of the engine hood comprises a lower driving structure 1, an upper swing structure 5 mounted on the lower driving structure 1 and rotated on the lower driving structure in a horizontal plane, a cabin 3 and an engine room 4 mounted on the upper swing structure 3, an engine hood frame 5 mounted on the upper portion of the engine room 4, an engine hood door 7 hinge-engaged to the engine hood frame 5 in front and rear directions (i.e., a traveling direction), a working device 14 mounted on the upper swing structure 2 and having a boom 9 driven by a boom cylinder 8, an arm 11 driven by an arm cylinder 10, and a bucket 13 driven by a bucket cylinder 12, and a counterweight 15 mounted on the rear side of the upper swing structure 2 to maintain a balance of the equipment during working.

In case of checking or repairing the MCV mounted in the engine room 4, the engine hood door 7 is turned around a hinge and is opened towards a rear of the equipment. Then, an operator gets on the engine room 4 to carry out the desired operation.

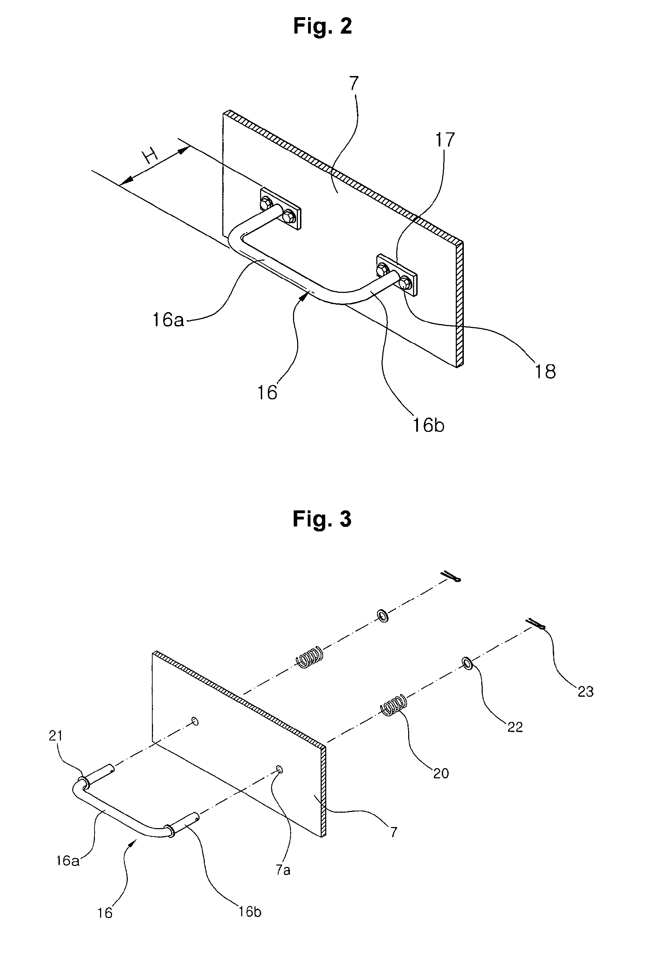

Referring to FIG. 2, the door handle 16 mounted on the engine hood door according to the prior art includes a handle portion 16a, extending portions 16b extending from both ends of the handle portion 16a and integrally welded to a fixing plate 17 in an end portion of each extending portion, and a fastening member 18 secured to a fastening hole formed on the engine hood door 7 via a through-hole of the fixing plate 17 to fasten the door handle 16 to the engine hood door 7.

Although not shown in the drawings, the extending portion 16b of the door handle 16 may be welded to the outer side of the engine hood door 7.
The door handle 16 always protrudes from an outer side of the engine hood door 7 at a fixed height H. With the construction, there is a problem that, in case the engine hood door 7 is opened, the operator operating on the engine room 4 collides against the door handle 16 from carelessness, and thus falls down from the engine room 4.

Since the door handle 16 always protrudes from the outer side of the engine hood door 7 at the fixed height H, the door handle 16 or the fastening portion of the door handle 16 may be damaged or broken by the shock applied from the exterior.
In view of the above problems resulted from the protruding door handle 16, it was tried to shorten the protruding height of the door handle 16 from the outer side of the engine hood door 7. In this instance, since a space (a gap between the outer side of the engine hood door 7 and the handle portion 16a) for accepting the operator's hand is not sufficient, it is troublesome for the operator to open the engine hood door 7.

### SUMMARY OF THE INVENTION

Accordingly, the present invention has been made to solve the above-mentioned problems occurring in the prior art while advantages achieved by the prior art are maintained intact.

One object of the present invention is to provide an engine hood door including a variable door handle which can minimize collision of an operator against the door handle by adjusting a protruding length of the door handle in accordance with a position of the engine hood door.
In one embodiment, the protruding length of the door handle from the outer side of the engine hood door is minimized, so that it is possible to prevent damage of the door handle due to the external shock.

In order to accomplish these objects, there is provided an engine hood door hinge-engaged to an engine hood frame of heavy equipment, comprising a door handle having a handle portion and extending portions extending from both ends of the handle portion, each of the extending portions being movably engaged to a through-hole formed in the engine hood door; a resilient member, positioned between the extending portion penetrating the through-hole and an inner side of the engine hood door, for variably adjusting the protruding length of the handle portion protruding from an outer side of the engine hood door; and a locking pin fixed to each end of the extending portions for preventing the door handle from being released from the engine hood door; wherein when the handle portion is pulled so as to open the engine hood door, the protruding length of the door handle from the outer side of the engine hood door is varied.

In one embodiment of the present invention, the door handle is circular in a cross-sectional shape. The door handle may be polygonal in a cross-sectional shape.

The engine hood door may further comprise a stopper, formed on the outer periphery of each extending portion outside the engine hood door, for maintaining a desired interval between the outer side of the engine hood door and the handle portion.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating heavy equipment including an engine hood door hinge-engaged to an engine hood frame;
FIG. 2 is a view illustrating a door handle mounted on an engine hood door according to the prior art;
FIG. 3 is an exploded perspective view illustrating a variable door handle mounted on an engine hood door according to an embodiment of the present invention;
FIG. 4 is a view illustrating a normal state of a door handle according to an embodiment of the present invention, in which the door handle is not used; and
FIG. 5 is a view illustrating a pulled state of a door handle according to an embodiment of the present invention, in which the door handle is pulled to open an engine hood door.

### DETAILED DESCRIPTION OF THE PREFERRED EMBODIMENTS

Hereinafter, a preferred embodiment of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

Referring to FIGs. 3 to 5, an engine hood door including a variable door handle according to an embodiment of the present invention is shown.

The engine hood door hinge-engaged to an engine hood frame of heavy equipment includes a door handle 16 having a handle portion 16a and extending portions 16b extending from both ends of the handle portion 16a, each of the extending portions being movably engaged to a through-hole 7a formed in the engine hood door 7.

The engine hood door further includes a resilient member 20 (herein a compression coil spring), positioned between the extending portion 16b penetrating the through-hole 7a and an inner side of the engine hood door 7, for variably adjusting the protruding length of the handle portion 16a protruding from the outer side of the engine hood door 7.

The engine hood door also includes a locking pin 23 fixed to each end of the extending portions 16a for preventing the door handle 16 from being released from the engine hood door 7.

With the construction, when the handle portion 16a is pulled so as to open the engine hood door 7, the protruding length of the door handle 16 from the outer side of the engine hood door 7 is varied.
The cross-sectional shape of the door handle 16 is circular to easily grip the door handle 16.

The cross-sectional shape of the door handle 16 may be polygonal according to a customer's taste or appearance of the equipment.

A stopper 21 is formed on the outer periphery of each extending portion 16b outside the engine hood door 7, in order to maintain a desired interval H1 between the outer side of the engine hood door 7 and the handle portion 16a.

In the drawings, reference numeral 22 indicates a washer, provided on the outer side of the extending portion 16b inside the engine hood door 7, for supporting the resilient member 20.

The operation of the engine hood door including the variable door handle according to the embodiment of the present invention will now be described in detail.

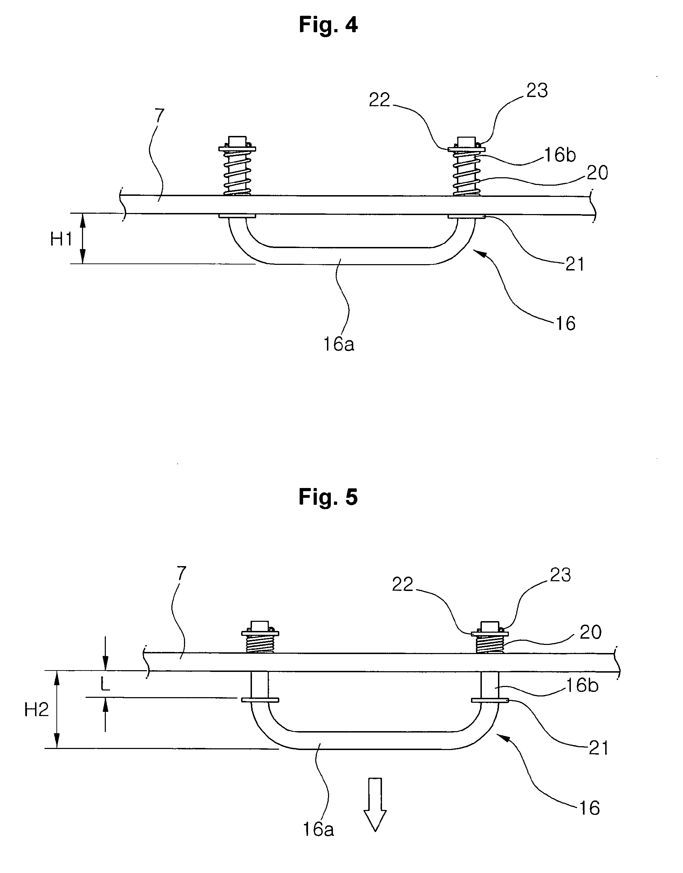

As shown in FIG. 4, while the engine hood door 7 is not opened, the door handle 16 protrudes from the outside of the engine hood door 7 with a minimum length. That is, the door handle 16 is pulled towards the engine hood door 7 by the resilient force of the resilient members 20 that are installed on the outer periphery of the extending portions 16b of the door handle 16.

In this instance, the door handle 16 always protrudes from the outer side of the engine hood door 7 at a desired length H1 by the stoppers 21 formed on the outer periphery of the extending portions 16b outside the engine hood door 7. Thus, since a minimum space is ensured between the outer side of the engine hood door 7 and the handle portion 16a, the handle portion 16a can be easily caught when opening the engine hood door 7.

As described above, while the engine hood door 7 is closed, the protruding length of the door handle 16 from the outer side of the engine hood door 7 is minimized, so as to prevent damage of the door handle 16 due to the external shock.
As shown in FIG. 5, in case of pulling the handle portion 16a in a direction indicated by an arrow so as to open the engine hood door 7, the door handle 16 protrudes from the outer side of the engine hood door 7 in a length L. That is, when the handle portion 16a is pulled so as to open the engine hood door 7, a sufficient space H2 is secured between the outer side of the engine hood door 7 and the handle portion 16a.

Accordingly, the engine hood door 7 can be easily opened, thereby giving every facility for an operator.

When the operator unlooses the handle portion 16a after the engine hood door 7 is opened, the extending portions 16b are pulled towards the engine hood door 7 by the resilient force of the resilient member 20. Since the door handle 16 moving towards the engine hood door 7 is restricted by the stoppers 21 formed on the extending portions 16b, the door handle 16 protruding from the outer side of the engine hood door 7 is maintained at the length H1.

With the construction, the engine hood door including the variable door handle according to the present invention has the following advantages.

While the engine hood door is closed, the door handle protrudes at the minimum length. Otherwise, when the engine hood door is opened, the protruding length of the door handle is varied. Consequently, it gives the facility for the operator, and minimizes the collision of the operator against the door handle from carelessness. Also, since the door handle protrudes from the outer side of the engine hood door with the minimum length, it can prevent damage of the door handle or fastening portion of the door handle due to the external shock.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. An engine hood door hinge-engaged to an engine hood frame of heavy equipment, comprising:
a door handle having a handle portion and extending portions extending from both ends of the handle portion, each of the extending portions being movably engaged to a through-hole formed in the engine hood door;
a resilient member, positioned between the extending portion 16b penetrating the through-hole and an inner side of the engine hood door, for variably adjusting the protruding length of the handle portion protruding from an outer side of the engine hood door; and
a locking pin fixed to each end of the extending portions for preventing the door handle from being released from the engine hood door;
wherein when the handle portion 16a is pulled so as to open the engine hood door, the protruding length of the door handle from the outer side of the engine hood door is varied.

2. The engine hood door as claimed in claim 1, wherein the door handle is circular in a cross-sectional shape.

3. The engine hood door as claimed in claim 1, wherein the door handle is polygonal in a cross-sectional shape.

4. The engine hood door as claimed in claim 1, further comprising a stopper, formed on the outer periphery of each extending portion outside the engine hood door, for maintaining a desired interval H1 between the outer side of the engine hood door and the handle portion.
